# EUROPEAN PATENT APPLICATION

(11) **EP 3 309 137 A1**
(43) Date of publication of application: **18.04.2018**
(21) Application number: 16193703.2
(22) Date of filing: 13.10.2016
(51) Int. Cl.: C05C 9/00, C05G 3/08, A23K 50/15

(54) **IMPROVED UREA-BASED COMPOSITION COMPRISING ELEMENTAL SULPHUR AND METHOD FOR THE MANUFACTURE THEREOF**

(71) Applicant: YARA International ASA, 0277 Oslo (NO)
(72) Inventor: COLPAERT, Filip, 9052 Zwijnaarde (BE); LEDOUX, Francois, 95240 Cormeilles en Parisis (FR); VAN BELZEN, Ruud, 4331 CA Middelburg (NL)
(74) Representative: Pappaert, Kris

(57) **Abstract**

The invention relates to a homogeneous, solid, particulate, urea-based composition comprising elemental sulphur and a urease inhibitor of the type phosphoric triamide, wherein the urea-based composition comprising elemental sulphur is further characterized in that one or more of the following measures applies:
a) it comprises 5 weight% or less, relative to the total weight of the composition, of one or more alkaline or alkaline-forming inorganic or organic compounds; or
b) it comprises an anticaking and/or moisture-repellent coating.

The composition according to the invention has improved properties for reducing ammonia loss by urease activity in the soil and is in particular suitable as a fertilizer.

The invention further relates to a method for the manufacture of a homogeneous, solid, particulate urea-based composition comprising urea, elemental sulphur and a urease inhibitor of the type phosphoric triamide, in particular N-(n-butyl) thiophosphoric triamide (nBTPT), as well as to a composition of kit of parts comprising:
a) one or more alkaline or alkaline-forming inorganic or organic compounds;
b) the urease inhibitor of the type phosphoric triamide in solid particulate or a liquid form, preferably wherein the urease inhibitor is N-(n-butyl) thiophosphoric triamide (nBTPT);
c) optionally, one or more anticaking and/or moisture-repellent compounds.

## Description

### SUMMARY OF THE INVENTION

This invention relates to a homogeneous, solid, particulate, urea-based composition comprising urea, elemental sulphur and a urease inhibitor of the type phosphoric triamide, in particular N-(n-butyl) thiophosphoric triamide (nBTPT), with improved properties for reducing ammonia loss by urease activity in the soil. The invention further relates to a method for the manufacture of a homogeneous, solid, particulate urea-based composition comprising urea, elemental sulphur, a urease inhibitor of the type phosphoric triamide, in particular N-(n-butyl) thiophosphoric triamide (nBTPT) and a stabiliser. The product is in particular suitable as a fertilizer.

### BACKGROUND OF THE INVENTION

Urea is the most common nitrogen-containing fertilizer. Urea has the highest nitrogen content of all nitrogen-containing fertilizers in common use (46 %). Its consumption worldwide has been considerably increased, from about 20 million tons in the early seventies to about 100 million tons at the beginning of the twenty first century. Nitrogen is the basic constituent for any living system as a constituent of protein.

Due to intensive farming and the reduction of sulphur emissions in the air by industry and the subsequent supply to the ground via rain, modern agriculture requires sulphur in addition to nitrogen.

Good agricultural practice usually require nitrogen and sulphur in a ratio 10/1 to 5/1 in order to answer to the crop demand, for example 150 kg nitrogen/ha/year and 30 kg sulphur/ha/year.

Lack of sulphur results both in a lower quantity and a lower quality of crops, and sulphur deficiency is often reflected in the content and type of proteins. Sulphur is indeed a major element entering into the chemistry of the cells in molecules such as amino acids (cysteine, methionine, etc.). It is also a catalyst for the photosynthesis and, in some cases, may improve the fixation of atmospheric nitrogen.

Conventionally, sulphur has been applied to the soil in the form of elemental sulphur, or as compounds such as ammonium sulphate, ammonium bisulphate, thiosulfates, sulphides or gypsum, or in combination with other fertilizer materials such as urea, for example as a physical blend of urea and ammonium sulphate, or as a co-granulated urea and ammonium sulphate material (urea ammonium sulphate, abbreviated as UAS).

This application deals with urea compositions comprising sulphur in the form of elemental sulphur. In such compositions, the urea is hydrolysed in the soil under the action of an enzyme catalyst, commonly called urease, to produce ammonia and carbon dioxide, while the sulphur is oxidized by soil bacteria to produce e.g. sulphate ions. Ureases are found in numerous bacteria, fungi, algae, plants and some invertebrates, as well as in soils, as a soil enzyme. Urease activity tends to increase the pH of its environment as the ammonia is dissolved into the water in the soil, which is taken up by the plants as their principle source of nitrogen. However, ammonia can also be released into the atmosphere, thus becoming unavailable for the plant root system, a process called ammonia volatilization. Up to 50 weight% of nitrogen can be lost as a results of the volatilization of ammonia, all depending on the soil type, water content, pH, climate conditions, etc.

The availability of nitrogen, originating from urea, to the root system of plants can be improved by combining (*i.e.* by incorporation or addition) a urease inhibitor with a urea-based fertilizer. Urease inhibitors are compounds that are capable of temporarily reducing the activity of the enzyme and slow down the rate at which urea is hydrolysed. There are many compounds that can inhibit urease, but only a few that are non-toxic, effective at low concentrations, chemically stable enough and able to be combined with urea-based fertilizers.

Among the most effective urease inhibitors known today are the phosphoric triamide compounds, first disclosed in US 4,530,714 (Allied Corporation, 1985).

An example of an effective urease inhibitor, disclosed in said patent is N-(n-butyl) thiophosphoric triamide, which will be referred to herein as nBTPT. This compound is actually the precursor for the active compound N-(n-butyl) phosphoric triamide (nBPT), obtained through oxidation of the thio-compound, but it is the thio-compound that is commonly produced, sold and used. Throughout this application, when referring to urease inhibitors of the type phosphoric triamide, it is understood that this comprises all active compounds, active precursors and active conversion products, resulting from said phosphoric triamides.

When combined with a urea-based fertilizer, phosphoric triamide compounds reduce the rate at which urea is hydrolysed to ammonia in the soil. The benefits that are realized as a result of the delayed urea hydrolysis include the following: (1) nutrient nitrogen is available to the plant over a longer period of time, (2) excessive build-up of ammonia in the soil following the application of the urea-based fertilizer is avoided, (3) the potential for nitrogen loss through ammonia volatilization is reduced, (4) the potential for damage by high levels of ammonia to seedlings and young plants is reduced, (5) plant uptake of nitrogen is increased, and (6) an increase in crop yields is attained. While phosphoric triamide compounds do not directly influence the rate of ammonium nitrification, they do control the levels of ammonium which are subject to the nitrification process and thereby indirectly controls the levels of nitrate nitrogen in the soil.

Surprisingly, the inventors have now been confronted with the problem that the urease inhibitor of the type phosphoric triamide, when applied either as a liquid, which is the most common commercially available form, or as a solid, is not stable when in contact with a urea-based composition comprising elemental sulphur. This was all the more surprising as the use of a urease inhibitor of the type phosphoric triamide is generally disclosed for urea-based fertilizers, such as urea, UAS and urea comprising elemental sulphur, and sulphur is a very pure substance that is insoluble in water. Moreover, even a stabilised urease inhibitor of the type phosphoric triamide in an alkaline organic solvent, such as a mixture of propylene glycol and N-methylpyrrolidine is rapidly degraded. In this context, with stability is meant that the original urease inhibitor is chemically degraded. This finding was most surprising, but stimulated the inventors to find a solution for the problem of stabilizing the urease inhibitor (*i.e.* reducing its degradation) in the presence of urea base material comprising elemental sulphur.

### PRIOR ART

The problem of stabilizing a urease inhibitor (*i.e.* reducing its degradation) in the presence of a urea base material comprising elemental sulphur is not disclosed in the prior art, nor are measures to prevent such degradation.

WO2011/009572 (SKW Stickstoffwerke Piesteritz GmbH, 2011) discloses a urea-based granular fertilizer composition comprising urea, a urease inhibitor of the type phosphoric triamide in powder form and a paraffin-based wax. A urea-based composition comprising elemental sulphur is not disclosed, nor is the problem of the current invention.

US 2012/0096912 (Rizzo, 2012) discloses a method for improving the yield of rice plants by applying a granular urea ammonium sulphate that includes nBTPT. The problem according to our invention is not mentioned, nor is any of the measures proposed in the current invention.

### STATEMENT OF THE INVENTION

Surprisingly, the inventors now found that the stability of the urease inhibitor of the type phosphoric triamide in the presence of a urea base material comprising elemental sulphur can be greatly improved when one or more measures, alone or in combination, are applied.

In its broadest concept, the invention is concerned with a homogeneous, solid, particulate, urea-based composition comprising urea, elemental sulphur and a urease inhibitor of the type phosphoric triamide, wherein the urea -based composition is further characterized in that (a) it comprises 5 weight% or less, relative to the total weight of the composition, of one or more alkaline or alkaline-forming inorganic or organic compounds, or (b) an anticaking and/or moisture-repellent coating.

With regard to the invention, without being bound by theory, it is hypothesised that the alkaline or alkaline-forming inorganic or organic compound neutralises the released phosphoric acid which is formed during decomposition of the urease inhibitor of the type phosphoric triamide in view of the fact that the decomposition of the urease inhibitor of the type phosphoric triamide is acidcatalysed. As such, the decomposition of the urease inhibitor of the type phosphoric triamide is slowed down. Furthermore, the alkaline or alkaline-forming inorganic or organic compound has the ability to immobilize reactive sulphur derivatives, such as sulphide, that are either present as impurities in the elemental sulphur, or are formed during manufacture of the urea comprising elemental sulphur, and/or to convert such reactive sulphur derivatives into a form which is less reactive with the urease inhibitor of the type phosphoric triamide. For example, calcium oxide may react with sulphide in the presence of water, which is always present in small amounts in the elemental sulphur, to form calcium sulphide, which is insoluble in an aqueous environment, such as a soil.

Moreover, without being bound by theory, it is hypothesised that the addition of an anticaking and/or moisture-repellent coating slows down the degradation of nBTPT due to the fact that the anticaking and/or moisture-repellent coating acts as a protection layer between nBTPT, elemental sulphur and water and this partially prevents reaction between nBTPT and the reactive sulphur derivatives, such as sulphide. Also, the coating partially prevents moisture uptake, and as the presence of moisture increases the rate of decomposition of nBTPT, this decomposition is slowed down by the addition of the anticaking and/or moisture-repellent coating.

By applying one or both of these measures, alone or in combination, to the urea-based composition comprising elemental sulphur and a urease inhibitor of the type phosphoric triamide, the stability of the urease inhibitor of the type phosphoric triamide is greatly improved, leading, among others, to lower ammonia emissions, even when the urease inhibitor of the type phosphoric triamide was added to the urea-based composition comprising elemental sulphur a long time before the actual application on the field as a fertilizer.

The claimed measures can be applied independently from each other or in combination, wherein a combination can be more preferred depending on the actual situation of the composition according to the invention, such as storage temperature (low, high), application climate (tropical, arid), etc.. The invention will now be described in more detail.

### DETAILED DESCRIPTION OF THE INVENTION

In its broadest concept, the invention is concerned with a homogeneous, solid, particulate, urea-based composition comprising elemental sulphur and a urease inhibitor of the type phosphoric triamide, in particular N-(n-butyl) thiophosphoric triamide (nBTPT), wherein the urease inhibitor of the type phosphoric triamide is a compound of formula I: 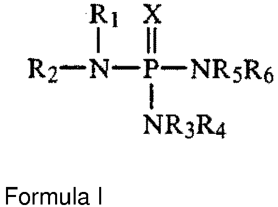 wherein:
X is oxygen or sulphur;
R₁ is alkyl, cycloalkenyl, aralkyl, aryl, alkenyl, alkynyl, or cycloalkyl;
R₂ is hydrogen, alkyl, cycloalkenyl, aralkyl, aryl, alkenyl, alkynyl, or cycloalkyl, or R₁ and R₂ together may form an alkylene or alkenylene chain which may optionally include one or more heteroatoms of divalent oxygen, nitrogen or sulphur completing a 4, 5, 6, 7, or 8 membered ring system; and
R₃, R₄, R₅ and R₆ are individually hydrogen or alkyl having 1 to 6 carbon atoms. In the present specification and claims, the term "phosphoric triamide compounds" is used to refer to the compounds of formula I.
nBTPT is sold as the most effective known urease inhibitor and has the following chemical formula 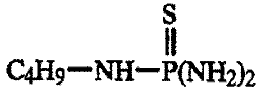
It should be understood that the term nBTPT, as used throughout this specification, refers not only to N-(n-butyl) thiophosphoric triamide in its pure form, but also to industrial grades of this compound which may contain up to 50 weight% impurities, depending on the method of synthesis and purification scheme(s), if any, employed in the production of the nBTPT.

In order to be effective, the urease inhibitor of the type phosphoric triamide, in particular N-(n-butyl) thiophosphoric triamide (nBTPT) is present in the urea-based composition comprising elemental sulphur at a level of 0.0001-1% weight%, preferably 0.02-0.2% weight%, most preferably 0.04-0.06 weight%, relative to the total weight of the composition.

As generally referred to herein and unless indicated otherwise, weight% refers to the weight percentage of an ingredient of a composition, relative to the total weight of said composition.

According to one embodiment, the urease inhibitor can be a liquid at room temperature, a liquid at elevated temperature, or a solid which is dissolved (solution) or suspended (suspension) into a liquid carrier, all of which are different liquid forms of the urease inhibitor of the type phosphoric triamide, in particular N-(n-butyl) thiophosphoric triamide (nBTPT).

In embodiments where the urease inhibitor of the type phosphoric triamide, in particular N-(n-butyl) thiophosphoric triamide (nBTPT), is used as a liquid, it is preferably used as a 0.1 to 75 weight% solution, preferably as a 15 to 30 weight% solution, relative to the total weight of the solution.. Commercial solutions are available, for example as Agrotain® Ultra (Koch, US), N Yield™ (Eco Agro, The Netherlands), Rhodia Ag-Rho™ N Protect B (Solvay, Germany), Iper N-Protect Liquid (Van Iperen, The Netherlands) and BASF Limus (BASF, Germany).

In embodiments where the urease inhibitor nBTPT is used as a liquid, dissolved into a carrier, it can be used as a powder, dissolved in propylene glycol, for example as 17,5 weight% of nBTPT. It is available from Yara International ASA (Norway) as Amiplus® liquid.

Experiments showed that, in compositions according to the invention, less urease inhibitor of the type phosphoric triamide, in particular N-(n-butyl) thiophosphoric triamide (nBTPT) needs to be used than is commonly employed in the prior art. For example, an amount of 0.05 weight% is most preferred, while for the use of Agrotain® Ultra, an amount of 0.09 weight% is recommended. This finding can at least partly be attributed to the fact that in the compositions according to the invention, the urease inhibitor of the type phosphoric triamide, in particular N-(n-butyl) thiophosphoric triamide (nBTPT) is stabilized, while in the prior art, an overdose is needed to compensate for the degradation of the urease inhibitor and to increase shelf-live thereof. This finding also ensures that less urease inhibitor of the type phosphoric triamide, in particular N-(n-butyl) thiophosphoric triamide (nBTPT) is introduced into the environment.

In embodiments where the urease inhibitor nBTPT is used in its solid form, it is used as a powder, preferably with a purity of 99 weight% or more. It is available, for example, from Sunfit Chemical Co. (China).

The urease inhibitor of the type phosphoric triamide, in particular N-(n-butyl) thiophosphoric triamide (nBTPT) can be applied to the composition comprising the urea particles by common coating and blending techniques, well known to the skilled person, such as spray-coating and drum-coating.

The urease inhibitor of the type phosphoric triamide, in particular N-(n-butyl) thiophosphoric triamide (nBTPT) can also be applied to the composition comprising the urea base material and the elemental sulphur by hot melt mixing, as described in US 5,352,265 (Weston et al., 1994) for urea, which discloses that nBTPT is incorporated into the homogeneous granular fertilizer composition by blending a concentrated solution of nBTPT in a solvent selected from the group of liquid amides, 2-pyrrolidone, and N-alkyl 2-pyrrolidones, directly into the molten urea prior to its granulation.

According to a first embodiment of the present invention, the homogeneous, solid, particulate, urea-based composition comprising elemental sulphur and a urease inhibitor of the type phosphoric triamide comprises 5 weight% or less, relative to the total weight of the composition, of one or more alkaline or alkaline-forming inorganic or organic compounds.

According to one embodiment of the present invention, said alkaline or alkaline-forming organic compound is able to interact with the urease inhibitor, in particular N-(n-butyl) thiophosphoric triamide (nBTPT).

According to one embodiment of the present invention, said alkaline or alkaline-forming organic compound is able to interact with reactive sulphur derivatives, such as sulphide. Within the context of this application, the wording "able to interact" means that the alkaline or alkaline-forming inorganic or organic compound is able to react in any way (ionic, covalent, chelating, etc.) e.g. with reactive sulphur derivatives, such as sulphide, and immobilize the reactive sulphur derivatives and/or convert the reactive sulphur derivatives into a form which is less reactive with the urease inhibitor of the type phosphoric triamide or with phosphoric acid and neutralize the phosphoric acid. This excludes, for example, compositions comprising organic alkaline solvents as inert carriers for the urease inhibitor of the type phosphoric triamide. Compositions comprising such organic alkaline solvents acting as carriers for a urease inhibitor of the type phosphoric triamide are known from e.g. US 2014/ 0037570, and are also commercially available.

According to one embodiment, said alkaline or alkaline-forming inorganic compound according to the invention is selected from the group of metal oxides, such as calcium oxide, magnesium oxide, zinc oxide, sodium oxide, aluminium oxide, barium oxide and copper oxide; carbonates, such as calcium carbonate, calcium magnesium carbonate (dolomite), sodium carbonate, ammonium carbonate, barium carbonate; hydroxides, such as aluminium hydroxide, ammonium hydroxide, sodium hydroxide, potassium hydroxide, calcium hydroxide, magnesium hydroxide, iron hydroxide, barium hydroxide and tetraalkyl /aryl ammonium hydroxides; and acetates, such as sodium acetate, ammonium acetate, magnesium acetate, zinc acetate and barium acetate, and any mixture thereof.

According to one embodiment of the present invention, said alkaline or alkaline-forming organic compound is selected from the group of organic bases, such as ammonia; amines, such as triethylamine, ethanolamine and triethanolamine; amides, such as sodium amide and magnesium diamide; adenines; amidines; guanidines; anilines; carbamates; thiazoles; triazoles; pyridines; imidazoles; benzimidazoles; histidines; phosphazenes, and any mixture thereof.

By including 5 weight% or less, relative to the total weight of the composition, of the one or more alkaline or alkaline-forming inorganic or organic compounds in the urea-based composition comprising elemental sulphur and a urease inhibitor of the type phosphoric triamide, the stability of the urea-based composition comprising elemental sulphur and the urease inhibitor of the type phosphoric triamide is greatly improved, leading, among others, to lower volatile ammonia emissions.

Preferably, the alkaline or alkaline-forming inorganic or organic compound is selected from the group of calcium oxide, zinc oxide, magnesium oxide, calcium carbonate, calcium magnesium carbonate (dolomite), and any mixture thereof. Advantageously, the metals (Ca, Zn and Mg) in these compounds may also function as a nutrient element to plants in the soil.

In order to be most effective, the alkaline or alkaline-forming inorganic or organic compound is present in the composition at a level of 0.0001 to 5 weight%, preferably 0.02 to 1 weight%, most preferably 0.05 to 0.25 weight%, relative to the total weight of the composition.

The alkaline or alkaline-forming inorganic or organic compound is applied to the composition comprising the urea-based particles by common application techniques, such as coating and blending techniques, well known to the skilled person, such as spray-coating and drum-coating. It is preferred that the alkaline or alkaline-forming inorganic or organic compound and the urease inhibitor of the type phosphoric triamide is in intimate contact with each other, in order for the alkaline or alkaline-forming inorganic or organic compound to be effective. This can be achieved, most preferably, through the application of the urease inhibitor of the type phosphoric triamide, the alkaline or alkaline-forming compound that is able to interact with the urea (the stabilizer) and the anticaking and/or moisture-repellent coating to the particles, either successively, or simultaneously, for example as a liquid anticaking and/or moisture-repellent coating composition comprising the urease inhibitor of the type phosphoric triamide and the alkaline or alkaline-forming compound.

According to one embodiment, the weight ratio of urease inhibitor of the type phosphoric triamide (either liquid or solid) to the one or more alkaline or alkaline-forming inorganic compounds ranges from 1:20 to 1:1, preferably from 1:15 to 1:1, more preferably from 1:10 to 1:1. Exemplary, a weight ratio of nBTPT to CaO of about 1:5.5 was used.

According to a further embodiment, the present invention is also concerned with a homogeneous, solid, particulate, urea-based composition comprising elemental sulphur and a urease inhibitor of the type phosphoric triamide, containing a moisture-repellent coating that is applied at least onto the particulate urea base material comprising elemental sulphur, wherein the coating material is able to increase the moisture repellence of the urea base material. Furthermore, the coating may also be able to reduce dust formation. Preferably, the coating material is a non-polar material, in particular a liquid organic material, such as an oil, wax, resin or the like and any mixture thereof and is present in the composition at a level of 0.0001 to 1 weight%, preferably 0.02 to 0.5 weight%, most preferably 0.1 to 0.2 weight%, relative to the total weight of the composition.

Examples of suitable anticaking and/or moisture-repellent coatings are vegetable oil (e.g. rapeseed or neem), paraffin and Novoflow anti-caking and/or moisture repellence agents (Novochem Fertilizer Additives, The Netherlands).

Preferably, the moisture-repellent coating is a coating such as disclosed in EP 0768993 A1 (Norsk Hydro ASA), the content of which is enclosed hereby by reference, for a nitrogen-containing fertilizer, comprising at least a wax, an oil and a resin which is oil-soluble and miscible with wax (Tropicote®).

Furthermore, it was observed that, under bagged conditions without the substantial presence of a head space, *i.e.* with the substantial exclusion of moisture, atmospheric gasses such as oxygen, nitrogen, etc., the stability of the composition comprising a urea-based base material comprising elemental sulphur, a urease inhibitor of the type phosphoric triamide, in particular N-(n-butyl) thiophosphoric triamide (nBTPT) and an alkaline or alkaline-forming inorganic or organic compound, was further increased. Hence, the invention is in particular directed to a bagged urea-based composition according to the invention. As used in this application, "bagged" means that the product is packaged such that it is in essence not in contact with moisture and atmospheric gasses during the period it is packaged. Hence, the package may be a bag, big bag, container, box, etc., being in principle all packaging without the substantial presence of a head space, filled with an atmosphere, such as air.

Accordingly, a particular aspect refers to a container comprising the urea-based composition as disclosed herein, wherein the head space in said container is less than about 1%.

In the context of the present invention, the term "headspace" refers to the volume left at the top of the almost filled container before or after sealing.

In the context of the present invention, the term "about", when associated with the headspace, means +/- 0,1%. For example, "about 1%" means that 1,1%, 1,05%, 0,95% or 0,9% are also encompassed.

In a preferred embodiment, the container as described herein comprises a headspace of less than 1%, preferably less than 0.75%, preferably less than 0.5%, preferably less than 0.25% and preferably no headspace, based on the total volume of said container.

The urea-based composition may comprise any urea base material that has been described in the prior art or that is commercially available.

According to one embodiment, the urea-based composition is a composition which comprised a urea base material comprising finely divided sulphur particles in the urea base material, for example with sulphur particles sizes of smaller than 100 micrometer.

In WO2014/009326 (Shell, 2014) a urea base material comprising elemental sulphur is disclosed, obtained by mixing a first flow comprising a liquid fertilizer with a second flow comprising liquid elemental sulphur in a mixing device in the presence of a multifunctional ionic surfactant to form an emulsion comprising elemental sulphur particles which are coated with a layer of the surfactant and dispersed in a fertilizer material that can be solidified.

In a still unpublished PCT patent application, (Yara International ASA, 2016) a urea base material comprising elemental sulphur is disclosed, obtained by joining a first flow comprising a liquid urea-based material with a second flow comprising liquid elemental sulphur, which resulting flow is subsequently nebulized into a fluidized bed granulator, where a granulate urea-based fertilizer material comprising very file sulphur particles of less than 10 micrometres is formed.

ReSulf^{®} is an example of a commercial product, sold by Yara International ASA, being a particulate urea-based fertilizer comprising small phases of elemental sulphur with a 42-9S composition, and produced from a micro-emulsified elemental sulphur in a liquid urea basis using a surfactant and solidified using a classical prilling technique.

Not only prills, but also pastilles of a urea-based fertilizer comprising elemental sulphur were produced by Yara International ASA (Oslo, Norway) with a 42-9S composition using a cooling belt (Sandvik, Stockholm, Sweden and in Nitrogen + Syngas 313, September-October 2011).

According to another embodiment, the urea-based composition according to the invention is a composition which comprised a urea base material coated with elemental sulphur, for example in the form of elemental sulphur particles, for example with sulphur particles sizes of smaller than 100 micrometer.

The urea-based composition according to the invention comprises 50 to 100 weight%, preferably 75 to 100 weight%, more preferably 90 to 100 weight% of urea base material in particulate form, relative to the total weight of the urea composition.

Preferably, to serve as a fertilizer, the particle size (dp50) is between 1.0 and 6.0 mm, preferably between 2.0 and 4.0 mm, most preferably between 3.2 and 3.5 mm, as determined by mesh sieve screening.

Independently of its method of production, the urea base material may contain from about 0.1 to 20 weight% of elemental sulphur, preferably 1 weight% or more, more preferably 5 weight% or more, more preferably 10 weight% or more, relative to the total weight of the urea base material.

According to one embodiment, the urea base material is selected from the group of urea, urea-ammonium sulphate, urea-ammonium phosphate, and any combination thereof.

The invention further relates to a method for the manufacture of a homogeneous, solid, particulate urea-based composition comprising elemental sulphur and a urease inhibitor of the type phosphoric triamide, in particular N-(n-butyl) thiophosphoric triamide (nBTPT).

In particular, the invention relates to a method for the manufacture of a homogeneous, solid, particulate, urea-based composition comprising elemental sulphur according to the invention, the method comprising the steps of:
1) providing a urea base material comprising elemental sulphur;
2) adding a urease inhibitor in solid particulate or a liquid form, preferably wherein the urease inhibitor is N-(n-butyl) thiophosphoric triamide (nBTPT); and either one or both of:
   3) adding 5 weight% or less, relative to the total weight of the composition, of one or more alkaline or alkaline-forming inorganic or organic compounds;
   4) applying a coating that is able to increase at least the water repellence and/or anticaking properties of urea ammonium sulphate, preferably wherein said coating is as disclosed in EP 0768993 A1 of which the content is hereby included by reference; (Tropicote®);
   wherein the steps 2), 3) and/or 4) can be interchanged or wherein steps 2), 3) and/or 4) can be performed simultaneously, for example as the addition of a liquid anticaking and/or moisture-repellent coating composition comprising the urease inhibitor of the type phosphoric triamide and the alkaline or alkaline-forming compound.

In this respect the invention relates also to kit of parts, comprising:
a) the urease inhibitor of the type phosphoric triamide in solid particulate or a liquid form, preferably wherein the urease inhibitor is N-(n-butyl) thiophosphoric triamide (nBTPT) ; and either one or both of:
b) one or more alkaline or alkaline-forming inorganic or organic compounds, preferably wherein the alkaline or alkaline-forming compound is selected from the group of metal oxides, such as calcium oxide, magnesium oxide, zinc oxide, sodium oxide, aluminium oxide, barium oxide and copper oxide; carbonates, such as calcium carbonate, calcium magnesium carbonate, sodium carbonate, ammonium carbonate, barium , carbonate; hydroxides, such as aluminium hydroxide, ammonium hydroxide, sodium hydroxide, potassium hydroxide, calcium hydroxide, magnesium hydroxide, iron hydroxide, barium hydroxide and tetraalkyl /aryl ammonium hydroxides; and acetates, such as sodium acetate, ammonium acetate, magnesium acetate, zinc acetate and barium acetate, and any mixture thereof;
(c) one or more anticaking and/or moisture-repellent compounds.

The components of such kit of parts can then be added to solid particulate urea comprising elemental sulphur to obtain the homogeneous, solid, particulate, urea-based composition comprising elemental sulphur and a urease inhibitor of the type phosphoric triamide according to the invention.

According to one embodiment, the components are provided in separate units. According to another embodiment, the components are premixed and provided in a combined unit. Preferably, they are premixed in a weight ratio of urease inhibitor of the type phosphoric triamide to one or more alkaline or alkaline-forming inorganic compounds of 1:20 to 1:1, preferably 1:15 to 1:1, more preferably 1:10 to 1:1.

Finally, the invention concerns a method for improving the stability of a urease inhibitor of the type phosphoric triamide, in particular N-(n-butyl) thiophosphoric triamide (nBTPT), in a urea-based composition comprising urea, elemental sulphur and said urease inhibitor, by either one or both of the following measures:
a) addition to the composition of 5 weight% or less, relative to the total weight of the composition, of one or more alkaline or alkaline-forming inorganic or organic compounds;
b) application of an anticaking and/or moisture-repellent coating onto the particulate urea base material comprising elemental sulphur or urea-based composition.

Detailed embodiments have been discussed herein above and in the following examples.

The preferred embodiments of the method according to the invention will now be illustrated by means of the following non-limitative examples.

The preferred embodiments of the method according to the invention will now be illustrated by means of the following non-limitative examples.

### EXAMPLES

### Description of Figures

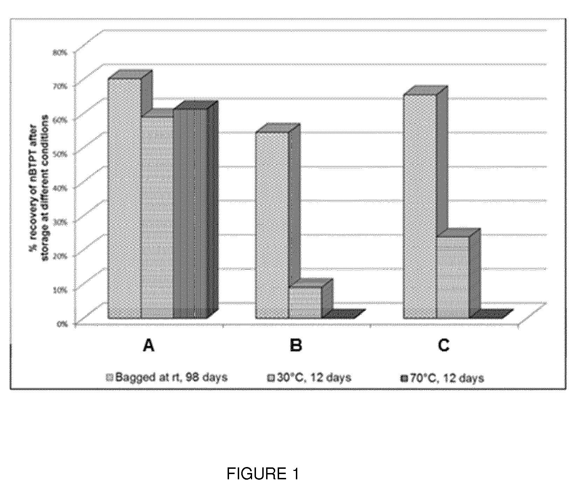

- Figure 1.: Stability of different nBTPT-formulations at various storage conditions, applied on urea versus applied on urea comprising elemental sulphur (ES) - % recovery of nBTPT after 98 days of storage under bagged storage conditions at room temperature (20-25°C), 12 days at 30 °C open to the air, and 12 days at 70 °C in a closed plastic container. [**A** = urea + 500 ppm nBTPT powder; **B** = urea + 9 % ES + 500 ppm nBTPT powder ; **C** = urea + 9 % ES + 500 ppm Agrotain® Ultra (KOCH) ; left column: Bagged at room temperature ; middle column: stored at 30 °C for 12 days ; right column: stored at 70 °C for 12 days].

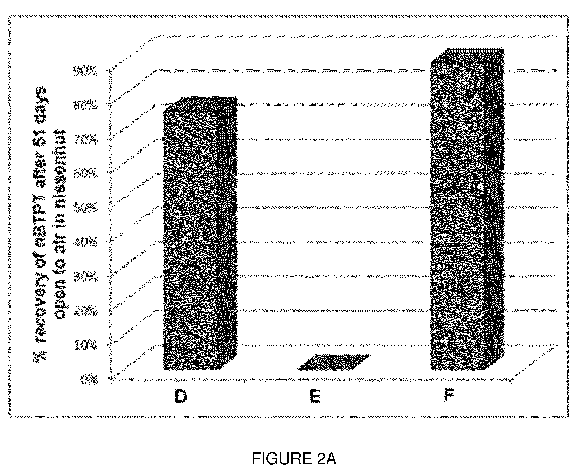

- Figure 2A.: Stability of nBTPT, applied on urea versus applied on urea comprising elemental sulphur (ES) at open storage conditions in nissenhut after 51 days. [**D** = urea + 500 ppm nBTPT powder ; **E** = urea + 9 % ES + 500 ppm nBTPT powder ; **F** = urea + 9 % ES + 500 ppm nBTPT powder + 2650 ppm CaO].

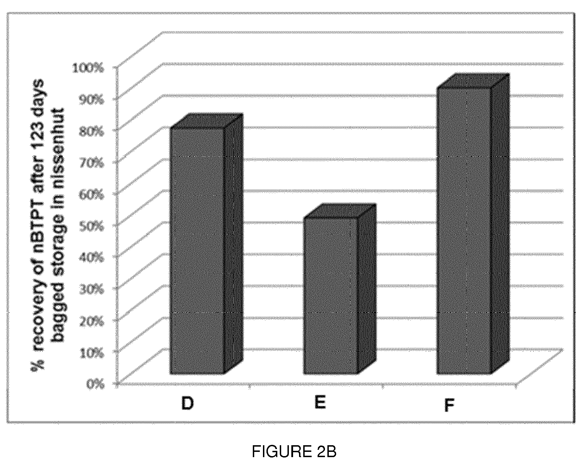

- Figure 2B.: Stability of nBTPT, applied on urea versus applied on urea comprising elemental sulphur (ES) at bagged storage conditions in nissenhut after 123 days [**D**= urea + 500 ppm nBTPT-powder ; **E** = urea + 9 % ES + 500 ppm nBTPT powder; **F=** urea + 9 % S + 500 ppm nBTPT powder + 2650 pm CaO].

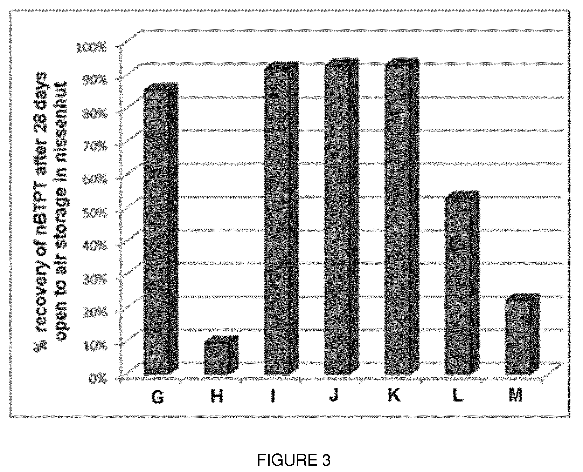

- Figure 3.: Stability of nBTPT in Amiplus^{®} liquid, applied on urea versus applied on urea comprising elemental sulphur (ES) without versus with alkaline stabilizers at open storage conditions in nissenhut, measured after 28 days of storage. [G = urea + Amiplus^{®} liquid ; **H** = urea + 10.5 % ES ; I = urea + 10.5 % ES + 2500 ppm CaO ; **J** = urea + 10.5 % ES + 1800 ppm MgO ; **K** = urea + 10.5 % ES + 4464 ppm CaCO₃ ; **L** = urea + 10.5 % ES + 3634 ppm ZnO ; **M** = urea + 10.5 % ES + 4500 ppm Et₃N].

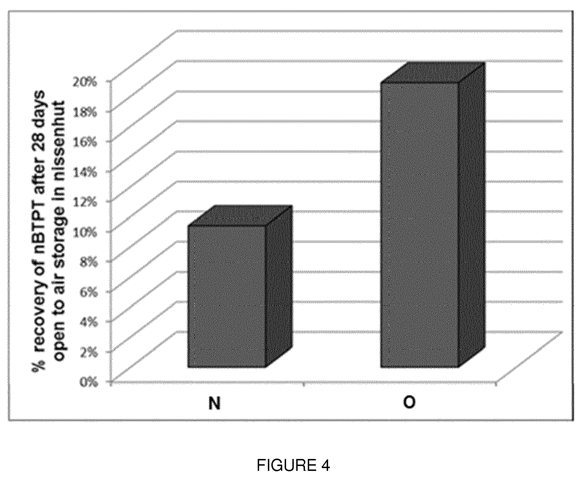

- Figure 4.: Stability of nBTPT in Amiplus^{®} liquid, applied on urea comprising elemental sulphur (ES) without versus with moisture-repellent coating Tropicote® at open storage conditions in nissenhut, measured after 28 days of storage. [**N** = urea + 10.5 % ES ; O = urea + 10.5 % ES + 2500 ppm Tropicote®].

### Experimental

### 1. Preparation of the samples

1.2 kg of solid fertilizer material was added to a lab scale drum. In a next step, the nBTPT material was slowly added and subsequently followed, if applied, by an alkaline or alkaline-forming inorganic or organic compound. A residence time of 10 minutes was applied and the rotating speed of the drum was consequently the same in each experiment. In case a moisture-repellent coating was added, a nebulizer was used and, depending on the order of addition, the moisture-repellent coating was added before or after addition of the nBTPT material. Before use, the moisture-repellent coating was preheated to 80 °C.

For some samples, an accelerated stability test was done after storing these samples at elevated temperatures:
- Oven of 30 °C, open to air
- 70 °C in a closed plastic container

Typically, a day/night cycle is generated in the nissenhut, with temperature fluctuations between 0 to 42 °C and fluctuations of relative humidity between 20 and 90 %, which can be compared with real life storage in silos.

### 2. HPLC analysis of nBTPT-content

HPLC analysis of nBTPT is done as described in the procedure CEN 15688-2007.

### 3. Products

Solid N-(n-butyl)thiophosphoric triamide was obtained from Sunfit Chemical Co. (China) (CAS-Nr. 94317-64-3), as a white crystalline solid with a melting point of 58-60 °C.

Amiplus^{®} liquid is a solution of 17.5 % w/w N-(n-butyl)thiophosphoric triamide (nBTPT) in propylene glycol with a red colouring agent and is produced and sold by Yara International ASA, Oslo,Norway.

Urea was obtained from Yara Sluiskil (The Netherlands) as granules YaraVera® Urea 46-0-0 (product code PA38M2).

Urea + ES granules were produced in the urea pilot plant in Yara Sluiskil (The Netherlands). This pilot plant has a batch capacity - after sieving - of about 50 kg of on-spec product. It basically consists of a stirred urea preparation vessel with an active volume of about 150 litres and a fluidized bed granulator of the UFT-type, equipped with a spraying nozzle of the spiral-type or HFT-type (EP 1 701 798 B1, Yara International ASA, 2005).

### Urea + 9% ES:

115.71 kg of liquid urea was mixed with 13.0 kg of elemental sulphur in powder form and 1.29 kg of a urea-formaldehyde conditioning agent, UF80 (from Dynea (, a mixture of urea/formaldehyde/water in a ratio of 23/57/20) at a temperature of about 130 °C to obtain a melt mix with 10 % of sulphur with a melt concentration of 95.2 %, after which the resulting mixture was pumped to an active fluidized bed granulator at a granulation temperature of about 101 °C, equipped with a spiral nozzle. The injection time was about 13 minutes. The particulate urea-based fertilizer comprising elemental sulphur was discharged from the granulator, sieved and cooled to room temperature.

### Urea + 10,5% ES:

115.93 kg of liquid urea was mixed with 14.3 kg of elemental sulphur in pastille (3-6mm) form and 1.28 kg of a urea-formaldehyde conditioning agent, UF80 (from Dynea Dynea A, Lillestrøm, Norway), a mixture of urea/formaldehyde/water in a ratio of 23/57/20) at a temperature of about 130 °C to obtain a melt mix with 11 weight% of sulphur with a melt concentration of 95.1 weight%, after which the resulting mixture was pumped to an active fluidized bed granulator at a granulation temperature of about 107 °C, equipped with a spiral nozzle. The injection time was about 12 minutes. The particulate urea-based fertilizer comprising elemental sulphur was discharged from the granulator, sieved and cooled to room temperature.

### EXAMPLE 1

Example 1 defines the problem of the invention. The following sample set was prepared with the following compositions:

| **Sample (Comparative Example)** | **Raw material** | **urease inhibitor** | **Stabilizer** |
|---|---|---|---|
| **A** | Urea | 500 ppm nBTPT powder | none |
| **B** | Urea + 9% S | 500 ppm nBTPT powder | none |
| **C** | Urea + 9% S | 500 ppm Agrotain® Ultra | none |

This set of samples was stored at room temperature (20 - 25 °C) in bags and at elevated temperature (30 °C and 70 °C, accelerated stability test).

Figure 1 shows the stability of nBTPT-formulations (liquid and powder), applied onto urea and onto urea comprising elemental sulphur (ES), under different storage conditions. Figure 1 shows clearly that in nBTPT formulations, applied onto urea comprising elemental sulphur, the nBTPT degrades fast and the nBTPT level drops even to 0 weight% only in 12 few days of storage at 70 °C.

### EXAMPLE 2

This example shows the beneficial effect of the addition of an alkaline or alkaline-forming inorganic or organic compound on urea comprising elemental sulphur on the stability of nBTPT.

The following three sample sets were prepared with the following compositions:

| **Exp.** | **Raw material** | **urease inhibitor** | **Stabilizer** |
|---|---|---|---|
| **D (Comp.)** | Urea | 500 ppm nBTPT powder | none |
| **E (Comp.)** | Urea+9% S | 500 ppm nBTPT powder | none |
| **F** | Urea+9% S | 500 ppm nBTPT powder | 2650 ppm CaO |

This set of samples was stored in nissenhut (9 - 39°C /30 - 81% RH), both bagged and open to air.

Figure 2A shows the stability of nBTPT, applied on urea versus applied on urea comprising elemental sulphur (ES) at open storage conditions in nissenhut after 51 days. The addition of CaO has a big beneficial effect: without CaO, the recovery of nBTPT after 51 days open to air is 0%. With CaO, the recovery of nBTPT after 51 days open to air is 89%.

Figure 2B shows the stability of nBTPT, applied on urea versus applied on urea comprising elemental sulphur (ES) for bagged storage conditions in nissenhut after 123 days. The addition of CaO has a big beneficial effect: without CaO, the recovery of nBTPT after 123 days of bagged storage drops to about 49 %. With CaO, the recovery of nBTPT after 123 days of bagged storage is still about 90%.

### EXAMPLE 3

A number of samples containing urea, 10,5 weight% of elemental sulphur and 500 ppm of Amiplus^{®} liquid as the urease inhibitor were prepared with different stabilizers on lab scale with a lab scale drum. The samples were stored 28 days in open pots in nissenhut.

| **Exp**. | **Raw material** | **urease inhibitor** | **Stabilizer** |
|---|---|---|---|
| **G (Comp.)** | Urea | 500 ppm nBTPT as Amiplus^{®} liquid | none |
| **H (Comp.)** | Urea + 10,5% ES | 500 ppm nBTPT as Amiplus^{®} liquid | none |
| **I** | Urea + 10,5% ES | 500 ppm nBTPT as Amiplus^{®} liquid | 2500 ppm CaO |
| **J** | Urea + 10,5% ES | 500 ppm nBTPT as Amiplus^{®} liquid | 1800 ppm MgO |
| **K** | Urea + 10,5% ES | 500 ppm nBTPT as Amiplus^{®} liquid | 4464 ppm CaCO₃ |
| **L** | Urea + 10,5% ES | 500 ppm nBTPT as Amiplus^{®} liquid | 3634 ppm ZnO |
| **M** | Urea + 10,5% ES | 500 ppm nBTPT as Amiplus^{®} liquid | 4500 ppm Et₃N |

Figure 3 shows the effect of different stabilizers (CaO, MgO, CaCO₃, ZnO, tri-ethylamine, and the effect of a coating on samples comprising urea, elemental sulphur and nBTPT. The stability was measured after 28 days. As can be seen, the effectivity of the stabilizers and coating after 14 days can be ranked as Ca-CO₃ = MgO > CaO > ZnO > Et3N > no stabilizer.

### EXAMPLE 4

A number of samples containing urea, 10,5 weight% of elemental sulphur and 500 ppm of Amiplus^{®} liquid as the urease inhibitor were prepared with and without the addition of moisture-repellent coating Tropicote® with a lab scale drum. The samples were stored for 28 days in open pots in nissenhut.

| **Exp.** | **Raw material** | **urease inhibitor** | **Coating** |
|---|---|---|---|
| **N (Comp.)** | Urea + 10,5% ES | 500 ppm nBTPT as Amiplus^{®} liquid | none |
| **O** | Urea + 10,5% ES | 500 ppm nBTPT as Amiplus^{®} liquid | 2500 ppm Tropicote® |

Figure 4 shows the effect of a moisture-repellent coating on samples comprising urea, elemental sulphur and nBTPT. The stability was measured after 28 days of storage. Although the beneficial effect of the coating is small compared to the effect of a alkaline of alkaline-forming component, is it still very significant (about 18 % after 28 days for a composition with the coating versus about 9 % at day 28 for a composition without the coating).

## Claims

1. A homogeneous, solid, particulate urea-based composition comprising urea, elemental sulphur, and a urease inhibitor of the type phosphoric triamide, **characterized in that**
(a) it comprises 5 weight% or less, relative to the total weight of the composition, of one or more alkaline or alkaline-forming inorganic or organic compounds, and/or
(b) an anticaking and/or moisture-repellent coating.

2. The urea-based composition according to claim 1, **characterized in that** the urease inhibitor of the type phosphoric triamide is a compound of formula: 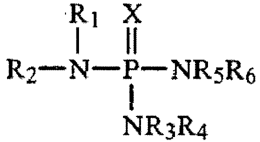 wherein:
X is oxygen or sulphur;
R₁ is alkyl, cycloalkenyl, aralkyl, aryl, alkenyl, alkynyl, or cycloalkyl;
R₂ is hydrogen, alkyl, cycloalkenyl, aralkyl, aryl, alkenyl, alkynyl, or cycloalkyl, or R₁ and R₂ together may form an alkylene or alkenylene chain which may optionally include one or more heteroatoms of divalent oxygen, nitrogen or sulphur completing a 4, 5, 6, 7, or 8 membered ring system; and
R₃, R₄, R₅ and R₆ are individually hydrogen or alkyl having 1 to 6 carbon atoms.

3. The urea-based composition according to any one of claims 1 to 2, wherein the urease inhibitor is N-(n-butyl) thiophosphoric triamide (nBTPT).

4. The urea-based composition according to any one of claims 1 to 3, wherein the urease inhibitor, in particular N-(n-butyl) thiophosphoric triamide (nBTPT), is present at a level of 0.0001-1% weight%, preferably 0.02-0.2% weight%, most preferably 0.04-0.06 weight%, relative to the total weight of the composition.

5. The urea-based composition according to any one of claims 1 to 4, wherein the alkaline or alkaline-forming inorganic or organic compound is able to interact with the urease inhibitor, in particular N-(n-butyl) thiophosphoric triamide (nBTPT).

6. The urea-based composition according to any one of claims 1 to 5, wherein the alkaline or alkaline-forming inorganic or organic compound is able to interact with reactive sulphur derivatives, such as sulphide.

7. The urea-based composition according to any one of claims 1 to 6, wherein the alkaline or alkaline-forming inorganic or organic compound is selected from the group of metal oxides, carbonates, hydroxides, acetates, and organic bases, and mixtures thereof.

8. The urea-based composition according to claim 7, wherein the alkaline or alkaline-forming compound is selected from the group of calcium oxide, zinc oxide, magnesium oxide, calcium carbonate, calcium magnesium carbonate (dolomite), and mixtures thereof.

9. The urea-based composition according to any one of claims 1 to 8, wherein the alkaline or alkaline-forming compound is present in the composition at a level of 0.0001 to 5 weight%, preferably 0.02 to 1 weight%, most preferably 0.05 to 0.25 weight%, relative to the total weight of the composition.

10. The urea-based composition according to any one of claims 1 to 9, wherein the weight ratio of urease inhibitor of the type phosphoric triamide to one or more alkaline or alkaline-forming inorganic compounds in the composition ranges from 1:20 to 1:1, preferably from 1:15 to 1:1, more preferably from 1:10 to 1:1.

11. The urea-based composition according to any one of claims 1 to 10, wherein the anticaking and/or moisture-repellent coating comprising at least a wax, oil and a resin which is oil-soluble and miscible with wax.

12. The urea-based composition according to any one of claims 1 to 11, comprising 50 to 100 weight%, preferably 75 to 100 weight%, more preferably 90 to 100 weight% of urea base material in particulate form, relative to the total weight of the urea composition.

13. The urea-based composition according to any one of claims 1 to 12, wherein the urea base material comprises 0.1 to 20 weight% of elemental sulphur, relative to the total weight of the urea base material

14. The urea-based composition according to claim 13, wherein the urea base material is selected from the group of urea, urea-ammonium sulphate, urea-ammonium phosphate, and any combination thereof.

15. The urea-based composition according to any one of claims 1 to 14, wherein the urea-based composition is a composition which comprises a urea base material comprising finely divided sulphur particles in the urea base material, or a urea base material coated with elemental sulphur.

16. Use of the homogeneous, solid, particulate urea-based composition as claimed in anyone of claims 1 to 15 as a fertilizer, preferably for supporting the growth of agricultural products on a sulphur - deficient soil.

17. Use of the homogeneous, solid, particulate urea-based composition as claimed in anyone of claims 1 to 15 as an animal feed.

18. A method for the manufacture of a homogeneous, solid, particulate, urea-based composition according to any one of claims 1 to 15, the method comprising the steps of:
1) providing a urea base material comprising elemental sulphur;
2) adding a urease inhibitor in solid particulate or a liquid form, preferably wherein the urease inhibitor is N-(n-butyl) thiophosphoric triamide (nBTPT); and either one or both of:
3) adding 5 weight% or less, relative to the total weight of the composition, of one or more alkaline or alkaline-forming inorganic or organic compounds;
4) applying a coating that is able to increase at least the water repellence and/or anticaking properties of urea ammonium sulphate, preferably wherein said coating is as disclosed in EP 0768993 A1 of which the content is hereby included by reference; (Tropicote®); wherein the steps 2), 3) and/or 4) can be interchanged or wherein steps 2), 3) and/or 4) can be performed simultaneously.

19. A kit of parts, comprising
a) the urease inhibitor of the type phosphoric triamide in solid particulate or a liquid form, preferably wherein the urease inhibitor is N-(n-butyl) thiophosphoric triamide (nBTPT) ; and either one or both of:
b) one or more alkaline or alkaline-forming inorganic compounds, preferably wherein the alkaline or alkaline-forming compound is selected from the group of metal oxides, carbonates, hydroxides, acetates, and mixtures thereof;
c) one or more anticaking and/or moisture-repellent compounds.

20. Method for improving the stability of a urease inhibitor of the type phosphoric triamide, in particular N-(n-butyl) thiophosphoric triamide, (nBTPT) in a urea-based composition comprising urea, elemental sulphur and said urease inhibitor, by either one or both of the following measures:
a) addition to the composition of 5 weight% or less, relative to the total weight of the composition, of one or more alkaline or alkaline-forming inorganic or organic compounds;
b) application of an anticaking and/or moisture-repellent coating onto the particulate urea base material comprising elemental sulphur or urea-based composition.

21. A container comprising the urea-based composition according to any one of claims 1 to 15, wherein the head space in said container is less than 1%.
